# EUROPÄISCHE PATENTSCHRIFT

(11) **EP 0 951 249 B1**
(45) Veröffentlichungstag und Bekanntmachung des Hinweises auf die Patenterteilung: **03.03.2004**
(21) Anmeldenummer: 97953774.3
(22) Anmeldetag: 10.12.1997
(51) Int. Cl.: A61C 7/00, G06F 17/60

(54) **VORRICHTUNG ZUR ABWICKLUNG VON AUFTRÄGEN ZUR LIEFERUNG VON ORTHODONTISCHEN BÄNDERN**
DEVICE FOR PROCESSING ORDERS FOR SUPPLYING ORTHODONTIC BANDS
DISPOSITIF POUR LE TRAITEMENT DE COMMANDES RELATIVES A LA FOURNITURE DE BANDES ORTHODONTIQUES

(30) Priorität: 10.12.1996 DE 19651223
(43) Veröffentlichungstag der Anmeldung: 27.10.1999
(73) Patentinhaber: DENTAURUM J.P. WINKELSTROETER KG, 75228 Ispringen (DE)
(72) Erfinder: RÖHLCKE, Friedrich-Wilhelm, D-75236 Kämpfelbach-Bilfingen (DE); SCHORPP, Hans-Peter, D-76275 Ettlingen (DE); GRIESBECK, Karl-Heinz, D-76149 Karlsruhe (DE)
(74) Vertreter: Hoeger, Stellrecht & Partner
(86) Internationale Anmeldenummer: PCT/EP1997/006895
(87) Internationale Veröffentlichungsnummer: WO 1998/025537

(56) Entgegenhaltungen:
- EP-A- 0 576 268
- WO-A-94/10935
- US-A- 5 528 021

## Beschreibung

Die Erfindung betrifft eine Vorrichtung zur Abwicklung von Aufträgen zur Lieferung von orthodontischen Bändern mit auftragsspezifisch bestückten orthodontischen Funktionsteilen.

Die neue und erfindungsgemäße Vorrichtung soll insbesondere die Abwicklung solcher Aufträge in einer wesentlich kürzeren Zeit erlauben und gleichzeitig größere Sicherheit bei der betriesinternen Abwicklung der Aufträge schaffen.

Bislang wurden normalerweise die obengenannten Aufträge in der Datenverarbeitung erfaßt und in maschinenlesbarer Form kodiert abgespeichert.

Die Aufträge wurden parallel hierzu an die entsprechende Abteilung zur Ausführung dieser Aufträge gegeben, auftragsspezifisch die Bänder und Funktionsteile aus Vorräten entnommen und zu einem Arbeitsvorgang zusammengestellt. Für den fertigbearbeiteten Auftrag wurde eine geeignete Verpakkung ausgewählt und diese mit einem Etikett versehen, welches in der Regel nur eine kurze Beschreibung der verpackten Bänder mit Funktionsteilen aufgedruckt enthielt.

Nachteilig bei dieser Art der Abwicklung von Aufträgen zur Lieferung von orthodontischen Bändern mit auftragsspezifisch bestückten orthodontischen Funktionsteilen ist, daß aufgrund der stets nur in Worten und Zahlen vorhandenen Definition des Auftrags eine schnelle Erfassung der Art des Auftrags und dementsprechend auch eine schnelle und sichere Kontrolle des ausgeführten Auftrags beziehungsweise dessen Vergleich mit dem ursprünglichen Auftrag zeitaufwendig und teilweise fehlerbehaftet war.

Darüber hinaus ist für den mit den Bändern mit auftragsspezifisch bestückten orthodontischen Funktionsteilen belieferten Arzt und dessen Personal eine Zuordnung der erhaltenen Ware zu eigenen Vorräten und/ oder zu einem zu behandelnden Patienten schwierig aufgrund der mangelnden Information und der kleinen Strukturen der bestückten Funktionsteile. Darüber hinaus ist insbesondere bei den auftragsspezifisch bestückten orthodontischen Funktionsteilen sehr häufig der sogenannte Angulationswinkel in dem diese auf dem Band bestückt sind von großer Bedeutung und kleinere Winkelabweichungen lassen sich an dem bestückten Band nur schwer oder gar nicht mit ausreichender Sicherheit beurteilen.

Aus der WO 94/10935 ist ein Verfahren bekannt, mit dem orthodontische Hilfsteile automatisiert geplant und hergestellt werden sollen. Hierzu werden mit einer Scannervorrichtung Daten des Patienten erhoben und in zwei- oder dreidimensionale Bilder umgesetzt. Aus den Patientendaten werden mittels Computer Bogendrähte konstruiert und die engültigen Zahnpositionen berechnet. Darauffolgend werden die Hilfsteile konstruiert mit denen die Zähne aus der aktuellen in die berechneten Positionen gebracht werden sollen. Aufgrund der Erhebung individueller genauer Patientendaten können die orthodontischen Hilfsteile für die jeweilige Behandlung maßgeschneidert angefertigt werden.

Die neuartige Vorrichtung zur Abwicklung von Aufträgen zur Lieferung von orthodontischen Bändern mit auftragsspezifisch bestückten orthodontischen Funktionsteilen vermeidet die oben dargestellten Nachteile, in dem sie umfaßt:
eine Rechnereinheit mit einem Speicher zum Verwalten von Grunddaten der unbestückten orthodontischen Bänder, von Grunddaten der aufzuschweißenden Funktionsteile und von Daten der spezifisch mit einem oder mehreren Funktionsteilen bestückten Bändern sowie Grafikdatensätzen die den unbestückten und bestückten Bändern sowie den Funktionsteilen zugeordnet sind,
wobei diese Grund- und Grafikdaten in dem Speicher der Rechnereinheit gespeichert sind und wobei die Grafikdaten die Funktionsteile in leicht erfassbarer grafisch abstrakter Weise abbilden ;
eine Eingabevorrichtung zur Eingabe der Daten eines Auftrags für ein Band mit einem auftragsspezifisch bestückten Funktionsteil bzw. auftragsspezifisch bestückten Funktionsteilen; und
eine Druckereinheit zum Ausdrucken einer Auftragsbestätigung und zum Bedrucken von Etiketten mit Auftragsdaten sowie einer grafischen Darstellung des auftragsspezifisch bestückten Bandes.

Die Rechnereinheit weist eine Prüffunktion auf mittels welcher die über die Eingabevorrichtung eingegebenen Auftragsdaten daraufhin geprüft werden, ob sie mit den Daten eines in dem Speicher gespeicherten spezifisch bestückten Bandes übereinstimmen.

Aufgrund der Bereithaltung von Grafikdatensätzen, insbesondere für die mit Funktionsteilen bestückten Bändern und der automatischen Erzeugung eines Etiketts mit einer solchen Grafikdarstellung wird die für die Abwicklung des Auftrags notwendige Information in schneller und sicherer erfaßbarer Art und Weise an die an der Auftragsabwicklung und Kontrolle beteiligten Personen gegeben. Gleichzeitig ermöglicht das mit der Grafikdarstellung bedruckte Etikett dem die Sendung erhaltenden Arzt viel einfacher diese einem bestimmten Vorrat und/ oder einem bestimmten Patienten zuzuordnen.

Außerdem lassen sich über die Druckereinheit Ausführungsanweisungen auftragsspezifisch erstellen, ebenso wie Nachbestellformulare, die den Bändern bei der Auslieferung an den Kunden beigefügt werden können.

Ergänzend und für noch mehr Sicherheit sorgend kann vorgesehen sein, daß die Rechnereinheit über die Druckereinheit in die Lage versetzt ist, eine Auftragsbestätigung auszudrucken, welche eine grafische Darstellung des in Auftrag gegebenen spezifisch bestückten Bandes mit einem oder mehreren Funktionsteilen enthält. Dadurch erhält der Besteller oder Auftraggeber eine grafische Rückmeldung seines Auftrags und ist in die Lage versetzt, die Auftragsdaten sehr schnell und sicher zu kontrollieren und gegebenenfalls zu korrigieren.

Die Prüfung, die die Rechnereinheit für die über die Eingabevorrichtung eingegebenen Auftragsdaten veranlaßt, kann dazu führen, daß die Rechnereinheit die Erstellung eines dem auftragsspezifischen Band zugeordneten Grafikdatensatzes veranlaßt, nämlich dann, wenn bei der Prüfung festgestellt wird, daß ein entsprechender Grafikdatensatz in dem Verwaltungsspeicher noch nicht existiert.

Das Bestücken der Bänder mit Funktionsteilen kann durch einen Schweißvorgang, insbesondere Punktschweißen, Löten oder andere gleichwertige Fügetechniken vorgenommen werden.

Die erfindungsgemäß verwendeten Grafikdatensätze der Bänder und der Funktionsteile können photographisch, über CAD oder in sonstiger Weise erfaßt und/oder bearbeitet sein.

Wesentlich ist, daß aus den Grafikdatensätzen die Grafikdarstellung eines auftragsspezifisch bestückten Bandes zusammengesetzt wird.

Die zu einer Grafikdarstellung zusammengestellten Grafikdatensätze eines Bandes und der zugehörigen Funktionsteile bietet insgesamt eine wesentlich bessere optische Informationshilfe als dies eine simple photographische Darstellung des bestückten Bandes vermöchte, da sich insbesondere die Funktionsteile jeweils so darstellen lassen, daß deren Hauptcharakteristika deutlich sichtbar und für den Betrachter leicht erfaßbar werden.

Eine weitere Rationalisierung der Auftragsabwicklung läßt sich dadurch erreichen, daß die Vorrichtung ferner ein Lagerverwaltungssystem umfaßt zum automatisch gesteuerten Entnehmen des für die Erledigung des Auftrags notwendigen Bandes und Funktionsteils oder Funktionsteilen, der Selektion einer geeigneten Verpackung und der Zusammenführung des Bandes, des Funktionsteils beziehungsweise der Funktionsteile und der Verpackung mit den von der Druckereinheit bedruckten auftragsspezifischen Etikett in einem Transportbehältnis.

Eine weitere Beschleunigung läßt sich dadurch erzielen, daß die Eingabevorrichtung eine Datenfernübertragungsschnittstelle umfaßt, über die ein Auftraggeber direkt die Auftragsdaten in maschinenlesbarer Form der Rechnereinheit übermittelt. Dabei kann vorgesehen sein, daß die Rückmeldung beziehungsweise Auftragsbestätigung ebenfalls über die Datenfernübertragungsschnittstelle dem Auftraggeber nicht nur die in Worten und Zahlen beschriebene Auftragsvariante zurückübermittelt, sondern auch den zugeordneten Grafikdatensatz, so daß der Auftraggeber quasi online eine durch eine Grafik ergänzte Auftragsbestätigung mit der Möglichkeit der Kontrolle und gegebenenfalls der Korrektur erhält.

Eine weitere Erleichterung der Zuordnung der verpackten spezifisch bestückten Bänder beim Auftraggeber zu bereits vorhandenen Vorräten und/oder dem Material zur Behandlung eines bestimmten Patienten kann dadurch erreicht werden, daß die von der Druckereinheit mit Auftragsdaten sowie einer grafischen Darstellung des auftragsspezifisch bestückten Bandes bedruckten Etiketten zusätzlich den Namen des mit dem Band zu behandelnden Patienten, gegebenenfalls in verschlüsselter Form, oder eine andere auftraggeberspezifische Kennzeichnung enthält. Damit ist eine maximale Sicherheit auch beim Auftraggeber gegeben, daß die georderten spezifisch bestückten Bänder auch beim vorgesehenen Patienten zum Einsatz kommen bzw korrekt in die Vorräte eingestellt werden.

Vorzugsweise wird das Lagerverwaltungssystem mit einer Handhabungsvorrichtung ausgestattet, welche aufgrund des abzuarbeitenden Auftrags die Entnahme der für die Erledigung des Auftrags notwendigen Bandes und des beziehungsweise der Funktions-teile aus entsprechenden Band- beziehungsweise Funktionsteilvorräten entnimmt.

Hierbei kann weiter vorgesehen sein, daß die entsprechenden Bänder und gegebenenfalls auch die Funktionsteile eine maschinenlesbare Markierung tragen, beispielsweise eine Lasermarkierung, die von der Handhabungsvorrichtung bei der Entnahme auf die Übereinstimmung mit den aufgrund des Auftrags gegebenen Grunddaten zu ermittelnden Identifikation geprüft werden können.

Ferner kann die Druckereinheit so ausgebildet sein, daß sie ein maschinenlesbar beschriftetes Etikett für das Transportbehältnis erzeugen kann, welches an dem Transportbehältnis für eine maschinenlesbare Ortung desselben während des Produktionsablaufs sorgt. Damit kann automatisch eine Rückmeldung an die Rechnereinheit gegeben werden, so daß in jedem Stadium der Auftragsabwicklung das Transportbehältnis und damit auch der Stand der Abarbeitung des Auftrags genau geprüft und dokumentiert werden kann.

Die Erfindung betrifft weiterhin ein Verfahren zur Abwicklung von Aufträgen zur Lieferung von orthodontischen Bändern, welches mit der vorbeschriebenen erfindungsgemäßen Vorrichtung durchgeführt werden kann.

Dieses Verfahren beinhaltet zum einen die Eingabe der Daten eines Auftrags für ein Band mit einem auftragsspezifisch aufzuschweißenden Funktionsteil in eine Rechnereinheit, die Prüfung der Rechnereinheit, ob die Auftragsdaten mit den im Speicher gespeicherten Daten von spezifisch bestückten Bändern übereinstimmen, das Bedrucken von Etiketten mit Auftragsdaten sowie einer grafischen Darstellung des auftragsspezifischen Bandes und die Entnahme der für die Erledigung des Auftrags notwendigen Bänder und Funktionsteile aus einem entsprechenden Vorrat. Ferner kann automatisch die Selektion einer geeigneten Verpackung und das Zusammenführen des Bandes, des Funktionsteils und der Verpackung mit dem von der Druckereinheit bedruckten auftragspezifischen Etikett in einem Transportbehältnis erfolgen. Das Transportbehältnis mit all diesen Einzelteilen geht dann zu der die Bestückungsarbeiten durchführenden Abteilung und kann dann zusammen mit dem erledigten Auftrag zur Kontrolle beziehungsweise zum Warenversand weitertransportiert werden.

Diese und weitere Vorteile der Erfindung werden im folgenden anhand der Zeichnung noch näher erläutert. Es zeigen im einzelnen:
- Figur 1: ein Blockdiagramm betreffend das erfindungsgemäße Verfahren;
- Figur 2: Beispiele für erfindungsgemäß zu verwendende Graphikdarstellungen;
- Figur 3: weitere Beispiele für erfindungsgemäß zu verwendende Graphikdarstellungen;
- Figur 4: ein erfindungsgemäß bedrucktes Verpakkungsetikett; und
- Figur 5: ein Beispiel für eine erfindungsgemäß erzeugte Ausführungsanweisung.

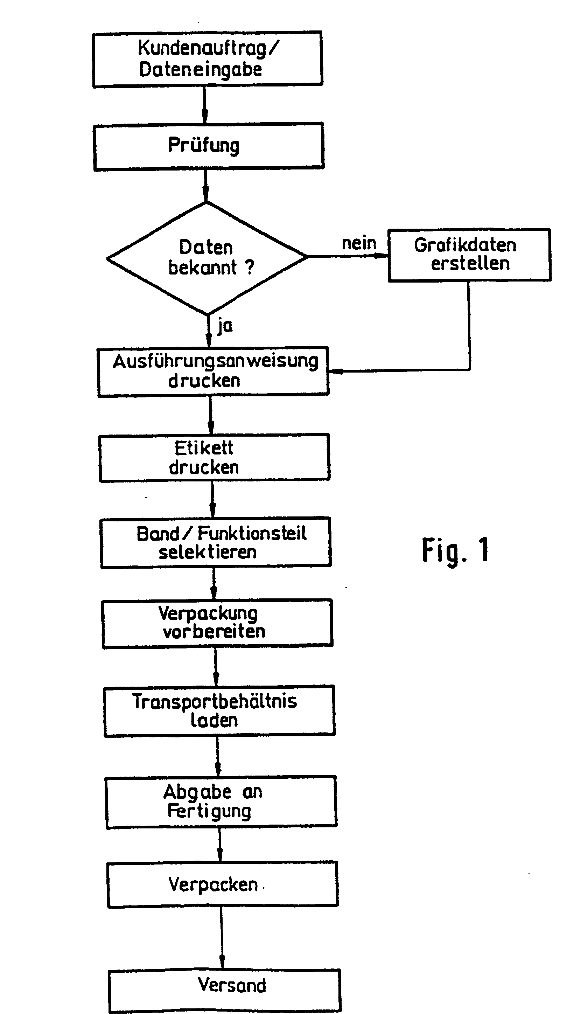

Das erfindungsgemäße Verfahren gemäß dem Ablaufschema des Blockdiagramms in Figur 1 beinhaltet nach Eingang des Kundenauftrags die Dateneingabe in die erfindungsgemäß zu verwendende Recheneinheit, welche nachfolgend eine Prüfung daraufhin vornimmt, ob die Auftragsdaten bekannt und mit Graphikdaten korrelierbar sind. Im Falle, daß die Graphikdaten im Speicher der Recheneinheit fehlen sollten, wird in einem gesonderten Schritt ein Graphikdatensatz erstellt und ansonsten direkt dazu übergegangen, automatisch eine Ausführungsanweisung zu drucken. Nachfolgend wird ein Etikett ausgedruckt, welches im Falle, daß die Druckeinheit parallel einen Drucker für die Ausführungsanweisungen und einen Drucker für das Bedrucken der Etiketten umfaßt, selbstverständlich auch gleichzeitig mit dem Drucken der Ausführungsanweisung oder gegebenenfalls auch vor Ausdruck der Ausführungsanweisung geschehen kann.

Nachfolgend werden das zu bestückende Band und die auf dem Band zu befestigenden Funktionsteile selektiert, die Verpackung vorbereitet und in ein Transportbehältnis geladen und danach an die Fertigung abgegeben. Nach der Fertigung, d.h. dem Bestücken des Bandes anhand der Ausführungsanweisung, wird das bestückte Band dann verpackt und an den Versand abgegeben.

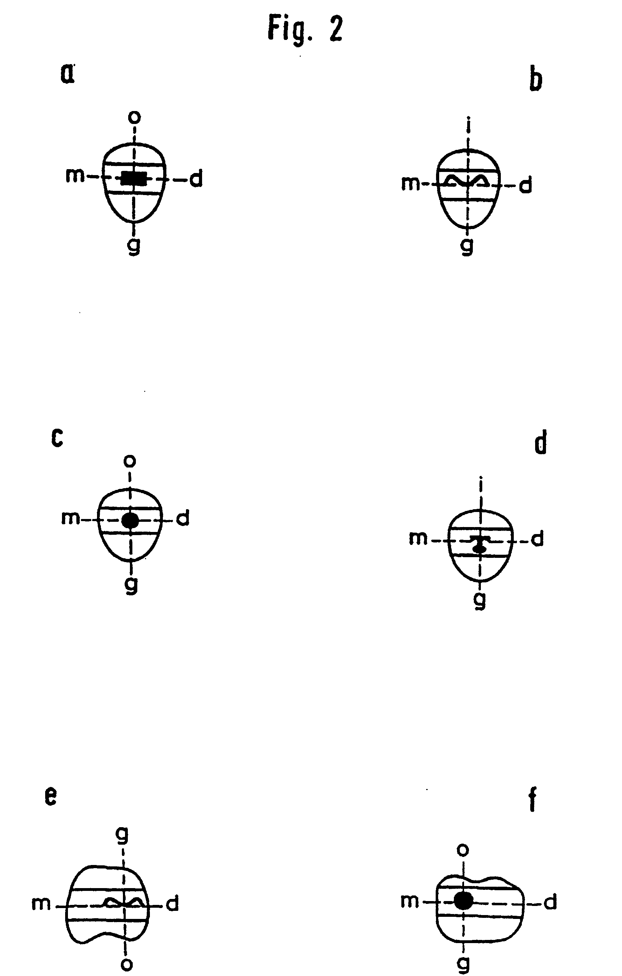

Figur 2 zeigt die beim Drucken der Ausführungsanweisung bzw. beim Bedrucken des Etiketts zu verwendenden Graphikdarstellungen der bestückten Bänder, wobei die Buchstaben m für mesial, d für distal, o für okklusal, g für gingival, i für incisal stehen. Die Form der Bänder in der Graphikdarstellung läßt gleichzeitig erkennen, ob es sich um ein Oberkiefer- oder ein Unterkieferband handelt und ebenso, ob es sich bei dem Band um ein Molarenband, ein Band für Frontzähne, etc. handelt.

In der Abbildung des Bandes ist darüberhinaus das Funktionsteil in graphisch abstrakter Weise abgebildet, wobei beispielsweise in Figur 2a eine sogenannte Setzlasche in zentraler Position angeordnet ist, was durch die mittige Anordnung des Setzlaschensymbols in dem Fadenkreuz angedeutet ist.

In Figur 2b ist als Funktionsteil auf dem Band ein sogenanntes Doppelhäkchen befestigt, ebenfalls in zentraler Position, wie die mittige Ausrichtung des Doppelhäkchensymbols in dem Fadenkreuz andeutet.

Figur 2c zeigt als Funktionsteil ein sogenanntes Knöpfchen, ebenfalls wieder in zentraler Position. Figur 2d zeigt als Funktionsteil auf dem Band in zentraler Position ein Lingual/Palatinalhäkchen und Figur 2e ein Doppelhäkchen, jedoch in distaler Position.

In Figur 2f ist schließlich als Funktionsteil erneut ein Knöpfchen abgebildet, aber in mesialer Position.

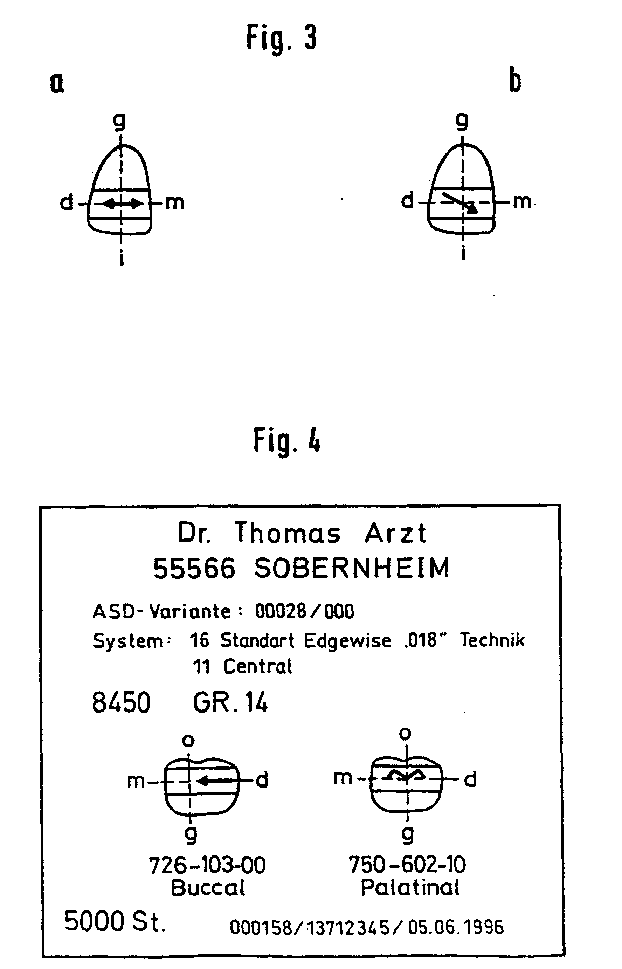

Weitere Beispiele für Graphikdarstellungen bestückter Bänder sind in der Figur 3 enthalten, wobei Figur 3a ein Band für einen zentralen rechten Frontzahn zeigt, bestückt mit einem Attachment in einer Nullgradangulation. Die Nullgradangulation wird hierbei durch einen Doppelpfeil angezeigt.

Figur 3b zeigt dasselbe Frontzahnband mit einem Attachment, welches jedoch mit einer Angulation ungleich null Grad aufgeschweißt ist, verdeutlicht durch die schräge Pfeilrichtung.

Die in den Figuren 2 und 3 wiedergegebenen Graphikdarstellungen werden auftragsspezifisch aus Grunddaten und zugehörigen Graphikdatensätzen für die jeweiligen Bänder sowie aus Grunddaten und zugehörigen Graphikdatensätzen für die Funktionsteile in Abhängigkeit des Kundenauftrages für spezifisch bestückte Bänder erstellt und automatisch auf der Ausführungsanweisung ausgedruckt und ebenso auf dem für die Verpackung zu verwendenden Etikett wiedergegeben.

Ein solches für die Verpackung zu verwendendes Etikett ist in Figur 4 wiedergegeben und kann, wie gezeigt, den Namen und die Adresse des zu beliefernden Arztes, Artikelnummern, Systemhinweise sowie schließlich die erfindungsgemäß erstellten Graphikdaten und sonstige wünschenswerte Informationen beinhalten.

Wichtig ist im Zusammenhang mit der vorliegenden Erfindung, daß auf dem Etikett aus Graphikdatensätzen zusammengesetzte Graphikdarstellungen aufgedruckt werden, die nicht nur dem den Auftrag bearbeitenden Personal, sondern insbesondere auch dem Empfänger, in leicht erfaßbarer Weise den Inhalt der Verpackung verdeutlichen.

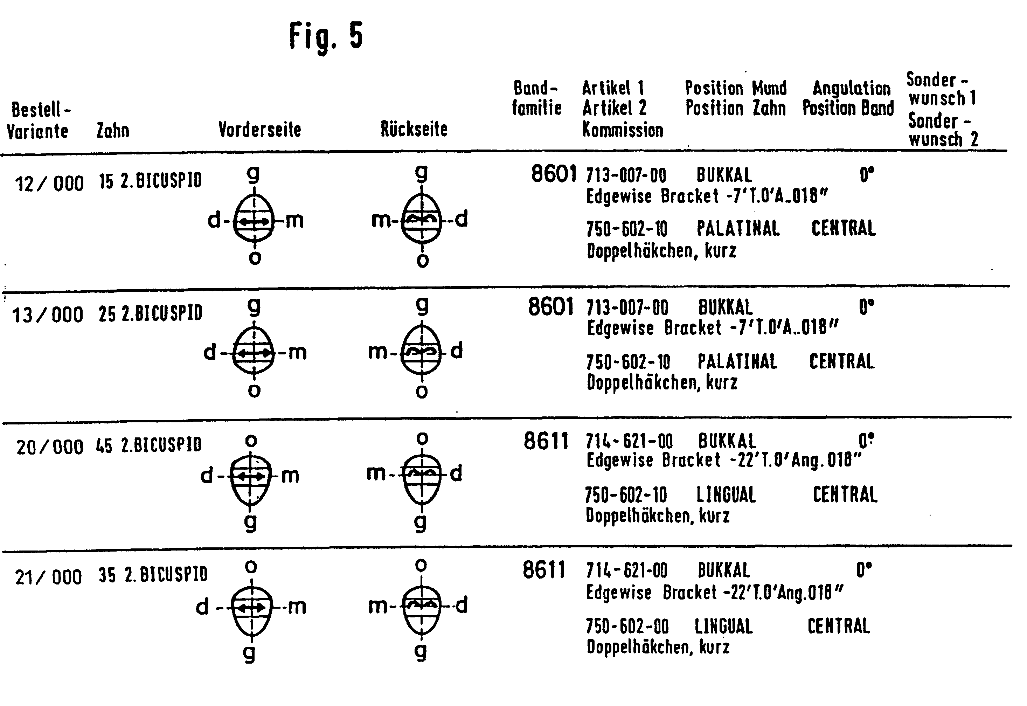

Figur 5 zeigt schließlich ein Beispiel für eine erfindungsgemäß erzeugte Ausführungsanweisung, welche beispielsweise um eine Mengenspalte ergänzt werden kann und in der dargestellten oder ähnlicher Form als Nachbestellformular verwendet werden kann.

## Patentansprüche

1. Vorrichtung zur Ausführung eines Verfahrens gemäß Anspruch 10, umfassend
eine Rechnereinheit mit einem Speicher zum Verwalten von Grunddaten der unbestückten orthodontischen Bänder, von Grunddaten der aufzuschweißenden Funktionsteile und von spezifisch mit Funktionsteilen bestückten Bändern sowie von den unbestückten und bestückten Bändern und den Funktionsteilen zugeordneten Grafikdatensätzen, wobei diese Grund- und Grafikdaten in einem Speicher der Rechnereinheit gespeichert sind und wobei die Grafikdaten die Funktionsteile in leicht erfassbarer grafisch abstrakter Weise abbilden;
eine Eingabevorrichtung zur Eingabe der Daten eines Auftrags für ein Band mit einem auftragsspezifisch bestückten Funktionsteil,
wobei die Rechnereinheit eine Prüffunktion aufweist mittels welcher die über die Eingabevorrichtung eingegebenen Auftragsdaten von der Rechnereinheit darauf geprüft werden, ob sie mit den Daten eines in dem Speicher gespeicherten spezifisch bestückten Bandes übereinstimmen, und
eine Druckereinheit zum Bedrucken von Etiketten mit Auftragsdaten sowie einer grafischen Darstellung des auftragsspezifisch bestückten Bandes.

2. Vorrichtung nach Anspruch 1, **dadurch gekennzeichnet, daß** die Druckereinheit so ausgebildet ist, daß mit ihr eine Ausführungsanweisung, eine Auftragsbestätigung und oder ein Nachbestellformular erstellbar ist.

3. Vorrichtung nach Anspruch 1 oder 2, **dadurch gekennzeichnet, daß** die Vorrichtung ein Lagerverwaltungssystem zum automatisch gesteuerten Entnehrnen des für die Erledigung des Auftrags notwendigen Bandes und Funktionsteils aus entsprechenden Vorräten umfaßt.

4. Vorrichtung nach Anspruch 3, **dadurch gekennzeichnet, daß** das Lagerverwaltungssystem die Funktion der Selektion einer geeigneten Verpackung und der Zusammenführung des Bandes, des oder der Funktionsteile und der Verpackung mit dem von der Druckereinheit bedruckten auftragsspezifischen Etikett in einem Transportbehältnis umfaßt.

5. Vorrichtung nach einem der Ansprüche 1 bis 4, **dadurch gekennzeichnet, daß** die Rechnereinheit im Falle, daß bei der Prüfung der Auftragsdaten festgestellt wird, daß sie mit keinen gespeicherten Daten spezifisch bestückter Bänder übereinstimmen, das Anlegen eines entsprechenden Datensatzes einschließlich eines zugeordneten Grafikdatensatzes veranlaßt.

6. Vorrichtung nach einem der Ansprüche 1 bis 5, **dadurch gekennzeichnet, daß** die Eingabevorrichtung eine Datenfemübertragungsschnittstelle umfaßt.

7. Vorrichtung nach einem der Ansprüche 1 bis 6, **dadurch gekennzeichnet, daß** die von der Druckereinheit mit Auftragsdaten sowie einer grafischen Darstellung des auftragsspezifisch bestückten Bandes bedruckten Etiketten den Namen des mit dem Band zu behandelnden Patienten, gegebenenfalls in verschlüsselter Form, und/oder den Namen des behandelnden Arztes aufgedruckt enthalten.

8. Vorrichtung nach einem der voranstehenden Ansprüche, **dadurch gekennzeichnet, daß** die Druckereinheit ein maschinell lesbar beschriftetes Etikett für das Transportbehältnis erzeugt.

9. Vorrichtung nach einem der voranstehenden Ansprüche, **dadurch gekennzeichnet, daß** die Druckereinheit eine Ausführungsanweisung und/oder eine Auftragsbestätigung und/oder Nachbestellformulare erstellt, welche eine grafische Darstellung des in Auftrag gegebenen spezifisch mit einem oder mehreren Funktionsteilen bestückten Bandes umfassen.

10. Verfahren zur Abwicklung von Aufträgen zur Lieferung von orthodontischen Bändern mit auftragsspezifisch bestückten, orthodontischen Funktionsteilen umfassend die Schritte:
Eingabe der Daten eines Auftrags für ein Band mit einem auftragsspezifisch bestückten Funktionsteil mittels einer Eingabevorrichtung in eine Rechnereinheit, welche einen Speicher zur Verwaltung der Grunddaten von unbestückten orthodontischen Bänder, von Grunddaten der aufzuschweißenden Funktionsteile und von spezifisch mit Funktionsteilen bestückten Bändern sowie von den unbestückten Bändern und den Funktionsteilen zugeordneten Grafikdatensätze umfasst, wobei diese Grund- und Grafikdaten in dem Speicher der Rechnereinheit gespeichert sind und wobei die Grafikdaten die Funktionsteile in leicht erfassbarer grafisch abstrakter Weise abbilden;
Vergleichen der über die Eingabevorrichtung eingegebenen Auftragsdaten in der Rechnereinheit mit den Daten der gespeicherten spezifische bestückten Bänder und Zuordnung der gespeicherten Grafikdaten zu den eingegebenen Auftragsdaten;
Bedrucken eines Etiketts mit Auftragsdaten sowie einer grafischen Darstellung des auftragsspezifisch bestückten Bandes;
Entnehmen des für die Erledigung des Auftrags notwendigen Bandes und Funktionsteils aus einem Vorrat.

11. Verfahren nach Anspruch 10, **dadurch gekennzeichnet, daß** mittels der Druckereinheit eine Ausführungsanweisung, eine Auftragsbestätigung und/oder ein Nachbestellformular erstellt wird.

## Claims

1. Device for carrying out a method according to Claim 10, comprising
a computer unit having a memory for managing basic data for the unequipped orthodontic bands, basic data for the functional parts that are to be welded on, and bands specifically equipped with functional parts as well as graphics data sets allocated to the unequipped and equipped bands and to the functional parts, these basic and graphics data being stored in a memory of the computer unit, and the graphics data representing the functional parts in an easily conceivable graphically abstract manner;
an input device for inputting the data for an order for a band having a functional part fitted as specified in the order,
the computer unit including a checking function by means of which the order data input using the input device are checked by the computer unit as to whether they correspond to the data for a specifically equipped band stored in the memory, and
a printer unit for printing labels with order data and a graphical representation of the band equipped as specified in the order.

2. Device according to Claim 1, **characterised in that** the printer unit is designed such that it can be used to produce a design instruction, an order acknowledgement and/or a repeat-order form.

3. Device according to Claim 1 or 2, **characterised in that** the device comprises a stores management system for automatically controlled removal of the band and the functional part needed for dealing with the order from appropriate stocks.

4. Device according to Claim 3, **characterised in that** the stores management system comprises the function of selecting a suitable package and bringing together the band, the functional part or parts and the package with the order-specific label printed by the printer unit in a transport container.

5. Device according to one of Claims 1 to 4, **characterised in that**, should the check of the order data establish that these do not correspond to any stored data for specifically equipped bands, the computer unit causes a corresponding data set including an associated graphics data set to be compiled.

6. Device according to one of Claims 1 to 5, **characterised in that** the input device comprises a data telecommunication interface.

7. Device according to one of Claims 1 to 6, **characterised in that** the labels which the printer unit has printed with order data and a graphical representation of the band equipped as specified in the order contain, in printed form, the name of the patient to be treated with the band, possibly in encrypted form, and/or the name of the doctor treating the patient.

8. Device according to one of the preceding claims, **characterised in that** the printer unit produces a printed label for the transport container, which can be read by a machine.

9. Device according to one of the preceding claims, **characterised in that** the printer unit produces a design instruction and/or an order acknowledgement and or repeat-order forms which comprise a graphical representation of the band indicated in the order and specifically equipped with one or more functional parts.

10. Method for processing orders for supplying orthodontic bands having orthodontic functional parts fitted as specified in the orders, comprising the following steps:
input of the data for an order for a band having a functional part fitted as specified in the order using an input device into a computer unit which comprises a memory for managing the basic data for unequipped orthodontic bands, basic data for the functional parts that are to be welded on, and bands specifically equipped with functional parts as well as graphics data sets allocated to the unequipped bands and to the functional parts, these basic and graphics data being stored in the memory of the computer unit, and the graphics data representing the functional parts in an easily conceivable graphically abstract manner;
comparison of the order data, input using the input device, in the computer unit with the data for the stored bands with specific parts fitted, and allocation of the stored graphics data to the order data input;
printing a label with order data and a graphical representation of the band equipped as specified in the order;
removal of the band and functional part needed for dealing with the order from a stock.

11. Method according to Claim 10, **characterised in that** the printer unit is used to produce a design instruction, an order acknowledgement and/or a repeat-order form.

## Revendications

1. Dispositif pour la mise en oeuvre d'un procédé selon la revendication 10, comprenant
une unité de calcul comportant une mémoire pour la gestion de données de base de bandes orthodontiques non équipées, de données de base des parties fonctionnelles devant être soudées et de bandes équipées spécifiquement de parties fonctionnelles, ainsi que d'ensembles de données graphiques associées aux bandes non équipées et aux bandes équipées et aux parties fonctionnelles, ces données de base et ces données graphiques étant mémorisées dans une mémoire de l'unité de calcul, et les données graphiques formant l'image des parties fonctionnelles d'une manière pouvant être conçues aisément et abstraites du point de vue graphique;
un dispositif d'entrée pour l'entrée des données d'une commande pour une bande comportant une partie fonctionnelle équipée d'une manière spécifique à la commande,
dans lequel l'unité de calcul possède une fonction de contrôle, à l'aide de laquelle les données de commande, introduites au moyen du dispositif d'entrée, sont contrôlées par une unité de calcul pour déterminer si elles concordent avec les données d'une bande équipée de façon spécifique, mémorisés dans la mémoire, et
une unité d'impression pour imprimer des étiquettes avec des données de commande ainsi que pour réaliser une représentation graphique de la bande équipée d'une manière spécifique à la commande.

2. Dispositif selon la revendication 1, **caractérisé en ce que** l'unité d'impression est agencée de telle sorte qu'avec cette unité, on peut établir l'indication d'exécution, une confirmation de commande ou un formulaire de commande ultérieure.

3. Dispositif selon la revendication 1 ou 2, **caractérisé en ce que** le dispositif comprend un système de gestion de stock pour le prélèvement commandé de façon automatique de la bande et de la partie fonctionnelle nécessaires pour satisfaire la commande, à partir de réserves correspondantes.

4. Dispositif selon la revendication 3, **caractérisé en ce que** le système de gestion de stock inclut la fonction de sélection d'un emballage approprié et de la réunion de la bande, de la ou des parties fonctionnelles et de l'emballage à l'étiquette spécifique à la commande, imprimée par l'unité d'impression, dans un récipient de transport.

5. Dispositif selon l'une des revendications 1 à 4, **caractérisé en ce que** dans le cas où lors du contrôle des données de commande il est établi que les données ne concordent avec aucune donnée mémorisée de bande équipée de façon spécifique, l'unité de calcul déclenche l'application d'un ensemble de données correspondant y compris d'un ensemble associé de données graphiques.

6. Dispositif selon l'une des revendications 1 à 5, **caractérisé en ce que** le dispositif d'entrée comprend une interface de transmission de données à distance.

7. Dispositif selon l'une des revendications 1 à 6, **caractérisé en ce que** les étiquettes, sur lesquelles sont imprimées, par l'unité d'impression, des données de commande ainsi qu'une représentation graphique de la bande équipée de manière spécifique à la commande, contiennent le nom du patient à traiter avec la bande, éventuellement sous forme codée et/ou le nom du praticien devant effectuer le traitement.

8. Dispositif selon l'une des revendications précédentes, **caractérisé en ce que** l'unité d'impression produit une étiquette, portant une inscription lisible en machine, pour le récipient de transport.

9. Dispositif selon l'une des revendications précédentes, **caractérisé en ce que** l'unité d'impression établit une introduction de réalisation et/ou une confirmation de commande et/ou des formulaires de commande complémentaire, qui comprennent une représentation graphique de la bande définie dans la commande et équipée spécifiquement d'une ou de plusieurs parties fonctionnelles.

10. Procédé pour l'exécution de commandes pour la livraison de bandes orthodontiques comportant des parties fonctionnelles orthodontiques équipées d'une manière spécifique à la commande, comprenant les étapes consistant à:
introduire les données d'une commande pour une bande comportant une partie fonctionnelle équipée d'une manière spécifique à la commande, au moyen d'un dispositif d'entrée dans une unité de calcul, qui comporte une mémoire pour la gestion de données de base de bandes orthodontiques non équipées, de données de base des parties fonctionnelles devant être soudées et de bandes équipées spécifiquement de parties fonctionnelles, ainsi que d'ensembles de données graphiques associés aux bandes non équipées et aux bandes équipées et aux parties fonctionnelles, ces données de base et ces données graphiques étant mémorisées dans une mémoire de l'unité de calcul, et les données graphiques formant l'image des parties fonctionnelles d'une manière pouvant être conçues aisément et abstraites du point de vue graphique;
comparer les données de commande introduites au moyen du dispositif d'entrée, dans l'unité de calcul, aux données des bandes mémorisées, équipées de façon spécifique et associer les données graphiques mémorisées aux données de commande introduites;
imprimer une étiquette avec des données de commande et représenter graphiquement la bande équipée d'une manière spécifique à la commande;
retirer d'une réserve la bande et la partie fonctionnelle, qui sont nécessaires pour satisfaire à la commande.

11. Procédé selon la revendication 10, **caractérisé en ce qu'**une instruction d'exécution, une confirmation de commande et/ou un formulaire de commande complémentaire sont établis au moyen de l'unité d'impression.
